(19) Europäisches Patentamt
European Patent Office
Office européen des brevets

(11) **EP 3 798 711 A1**

(12) **EUROPEAN PATENT APPLICATION**

(43) Date of publication:
**31.03.2021 Bulletin 2021/13**

(51) Int Cl.:
**G02B 21/00** *(2006.01)*  **G02B 27/10** *(2006.01)*

(21) Application number: **19200116.2**

(22) Date of filing: **27.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Leica Microsystems CMS GmbH 35578 Wetzlar (DE)**

(72) Inventors:
• **Deissler, Benjamin**
 **35510 Butzbach (DE)**
• **Schumann, Christian**
 **35423 Lich (DE)**

(74) Representative: **Schaumburg und Partner Patentanwälte mbB Postfach 86 07 48 81634 München (DE)**

(54) **IMAGING DEVICE AND METHOD FOR IMAGING AN OBJECT USING A MICROSCOPE**

(57)     An imaging device for a microscope comprises an optical imaging system configured to form at least two optical images of an object in at least two different focusing states, and a processor configured to process image information from the at least two optical images in order to obtain phase information, said phase information being characteristic of said object being imaged. The optical imaging system comprises an image sensor module having at least two image sensors associated with the at least two different focusing states, respectively, said at least two image sensors being configured to simultaneously detect the at least two optical images for generating the image information. The image sensor module comprises an adjustable aperture element which is controllable by the processor.

Figure 2

**Description**

Technical field

The present invention relates to an imaging device for a microscope, comprising an optical imaging system configured to form at least two optical images of an object in at least two different focusing states, and a processor configured to process image information from said at least two optical images to obtain phase information, said phase information being characteristic of said object being imaged. Further, the present invention relates to a method for imaging an object using a microscope.

Background

Phase-contrast microscopy is an imaging method in light microscopy using the fact that, in addition to the amplitude, the phase of light changes in accordance with a refractive index of a medium through which light is transmitted. This allows directly imaging object structures having only low inherent contrast. Otherwise, those object structures would be visible in a bright-field microscopy only with artificial coloration. Accordingly, phase-contrast microscopy is widely used for examination of transparent biological objects in which different object parts vary only slightly in light absorption but significantly in refractive index.

Commonly applied methods are the phase-contrast method according to Zernike and the differential interference contrast (DIC) method according to Nomarski. However, these methods are not applicable for imaging e.g. phase objects located in so-called microtiter plates or well plates. One reason for this is that these microtiter plates are generally made of plastic which is birefringent and thus influences the polarization of the light, the polarization being utilized in DIC. Further, in microtiter plates with small diameters, e.g. so-called "96-well plates", a meniscus forms in a liquid (e.g. cell culture medium) on a surface thereof to air. Such a meniscus shifts the image of a light ring like a lens surface. This shifts the image of a ring shaped aperture included in a condenser lens relative to a phase ring included in an objective lens when applying the phase-contrast method according to Zernike, and therefore decreases the contrast achieved by this method.

Furthermore, in many evaluation methods e.g. confluence measurement, etc., it is necessary to apply a segmentation of the recorded image. However, it is much more difficult to perform such a segmentation of a recorded image based on phase-contrast, DIC, or modulation-contrast methods compared to e.g. fluorescence imaging. This is partly due to non-linear contrast mechanisms inherent in these contrast methods. Thus, a bright spot in the recorded image does not necessarily mean that a corresponding object site has a large thickness or a large refractive index. Accordingly, a coloration-free contrast method would be beneficial enabling an object property, e.g. a phase shift, to be measured in a linear manner, whereupon a segmentation can be performed.

There exist different approaches to perform a so-called quantitative phase imaging (QPI) in which the phase shift is measured, i.e. the difference of optical path length when the light passes through the object. A possible approach is disclosed in Mir et al., "Quantitative Phase Imaging", Progress in Optics, Volume 57, 133 (2012). Such approaches may simplify segmentation considerably, as areas with greater thickness or greater refractive index can be easily distinguished from the background. However, many approaches are based on interference and are therefore disturbable and costly to implement. In particular, approaches based on interference require coherent illumination, for example laser light, and the specific components for separating and combining multiple beam paths. Integrating those components into common microscope systems is difficult, and regulatory requirements due to laser safety must also be observed.

Thus, it is desirable to determine the phase shift without relying on interference. There are two methods which allow the phase distribution of an object to be calculated quantitatively from a plurality of images without using interference.

Firstly, in a differential phase-contrast (DPC) method two images are captured based on an asymmetrical illumination, and the phase distribution is reconstructed from these images. Such a DPC method is disclosed in Tian and Waller, "Quantitative differential phase contrast imaging in an LED array microscope", Optics Express, Volume 23, 11394 (2015). Secondly, in a defocus contrast method two images are captured with a defocus of the same amount but opposite directions. The phase distribution is reconstructed from the defocused images. A defocus contrast method is disclosed in Kou et al., "Quantitative phase restoration by direct inversion using the optical transfer function", Optics Letters Volume 36, 2671 (2011).

The differential phase-contrast method and the defocus contrast method apply sequential imaging, i.e. the two images are captured one after the other. Further, both methods are based on the knowledge of the contrast transfer function, especially the phase transfer function of the optical system. The phase transfer function is a function of both the illumination distribution of the illumination system and the pupil transfer function of the imaging system. Accordingly, exact knowledge of the contrast transfer function is necessary to get reliable results from back calculation.

As mentioned above, in case of DPC, asymmetric illumination is used to generate contrast. However, when using microtiter plates, it is difficult to obtain accurate knowledge of the illumination distribution as the presence of the aforementioned meniscus causes unknown distortion and shift of the illumination distribution.

In case of the defocus contrast method, the defocus is usually implemented on the object side by shifting the objective lens relative to the object along the optical axis. Thus, a mechanical movement is utilized for defocusing, requiring motorization and limiting the frame rate as no image can be captured during displacement.

Further, document US 20070182844 A1 discloses a system for producing two different defocused images by means of a beam splitter. However, this system is not flexible in terms of integration into a microscope providing different magnifications.

Summary

It is an object of the present invention to provide an imaging device for a microscope and a method enabling improved phase-based imaging of samples, in particular when the samples are located in microtiter plates.

The aforementioned object is achieved by the subject-matter according to the independent claims. Advantageous embodiments are defined in the dependent claims and the following description.

An imaging device for a microscope comprises an optical imaging system configured to form at least two optical images of an object in at least two different focusing states, and a processor configured to process image information from said at least two optical images in order to obtain phase information, said phase information being characteristic of said object being imaged. The optical imaging system comprises an image sensor module having at least two image sensors associated with said at least two different focusing states, respectively, said at least two image sensors being configured to simultaneously detect said at least two optical images for generating said image information. The image sensor module comprises an aperture element which is controllable by said processor.

As explained above, conventional defocus contrast methods apply sequential imaging in order to obtain phase information which is characteristic of the object to be imaged. In contrast, by providing an image sensor module with at least two image sensors, the imaging device proposed herein enables the optical images to be detected simultaneously. Accordingly, there is no need to utilize a mechanical movement for an object-side defocusing as provided in conventional methods. As a result, the frame rate is not limited by focusing. Further, it is not necessary to motorize the objective or the microscope stage rendering the system less complex and reducing costs.

The image sensors may be formed by cameras, e.g. CCD or CMOS cameras, which are positioned within the image sensor module such that the lengths of the optical paths along which detection light propagates to the cameras differ from each other.

In contrast to conventional approaches like DPC, the imaging device advantageously avoids asymmetrical illumination. Accordingly, the imaging device is less sensitive to detrimental effects caused by a liquid meniscus typically occurring in a microtiter plate. As a result, reconstructing the phase information from the defocused images becomes easier.

Further, the imaging device is not subject to any restrictions regarding a possible segmentation of the recorded image. In particular, the solution proposed herein enables phase information to be obtained without using artificial object colorization. The image sensor module comprises an aperture element which can be controlled by the processor in order to vary an effective numerical aperture of an objective which is included in the optical imaging system. In particular, the aperture element can be used to adapt the effective numerical aperture of the objective to the magnification thereof. Thus, it is possible to maintain a ratio of the effective numerical aperture to the magnification at a constant value even in case that the magnification varies. For example, the magnification may change when a set of objectives having different magnifications is provided, each of these objectives being selectively insertable into the optical path of the microscope, e.g. by means of an objective changer.

Preferably, the at least two image sensors are located offset to each other along an optical axis direction of the optical imaging system for providing two different optical path lengths associated with said at least two optical images, respectively.

In particular, the at least two image sensors may be arranged on different image planes along the optical axis direction, said image planes being located on opposite sides of a focus plane of said optical imaging system at predetermined distances therefrom. The aforementioned focus plane is to be understood as defining a nominal optical path length associated with an optimally focused image. Correspondingly, the aforementioned image planes are to be understood as defining optical path lengths which differ from each other as well as from said nominal optical path length. Accordingly, it is evident that the optical axis direction is not to be understood as being limited to one single light propagation direction. Rather, the optical axis direction may comprise a plurality of light propagation directions e.g. created by a beam splitter being configured to split a single optical path into several optical paths.

Preferably, the aforementioned predetermined distances of the image planes from the focus plane are chosen such that the object-side defocus is approximately equal to the depth of field of the optical imaging system.

According to a preferred embodiment, the image sensor module comprises a beam splitter configured to split light from the object into at least two light beams associated with the at least two image sensors, respectively. By using a beam splitter, the different optical path lengths associated with the two image sensors can be implemented easily.

The processor may be included in the image sensor module. Using a module integrated processor enables the phase distribution to be reconstructed from the images in the sensor module itself. Thus, necessary calculations can be performed very fast. Further, bandwidth required for image data transfer can be saved as only one calculated image has to be transferred rather than two raw images

In a preferred embodiment, an interface may be provided for integrating the image sensor module into the optical imaging system by coupling the image sensor module to the interface device. Thus, existing microscope systems can easily be supplemented with the image sensor module in order to obtain phase information as described above.

The optical imaging system may comprise at least one objective configured to collect light from the object. The objective may be a lens exclusively used for imaging the object. Alternatively, the objective may be configured to additionally illuminate the object.

In a specific embodiment, the optical imaging system comprises a plurality of objectives having different magnifications, being selectively positionable on an optical axis of the optical imaging system to collect light from the object. In order to selectively position one of the objectives on the optical axis, the imaging device may comprise a suitable objective changer.

Preferably, the processor is configured to control the aperture element to adapt the effective numerical aperture of the objective to a magnification of the optical imaging system such that a ratio of the effective numerical aperture to the magnification equals a predetermined value.

As already mentioned above, preferably, the object-side defocus is approximately equal to the depth of field ($\approx \lambda/NA^2$) of the optical imaging system, $\lambda$ designating the wavelength and NA designating the numerical aperture of the objective. Further, the image-side defocus is given by $M^2$ times the object-side defocus, M being the magnification of the optical imaging system. Thus, a ratio $M/NA_{im}$ should be approximately constant in case a plurality of objectives with different magnifications are used ($NA_{im}$ being the effective numerical aperture of the objective, i.e. the imaging aperture). As a result, the aforementioned embodiment is especially advantageous when using a plurality of objectives having different magnifications.

The aperture element, which is included in the image sensor module and preferably adjustable e.g. by a motor, can be used to limit the effective numerical aperture $NA_{im}$. In particular, the aperture element may be located in or near a plane into which a pupil of the objective is imaged. Adjusting the aperture element allows a constant ratio $M/NA_{im}$ to be achieved for a plurality of objectives having different magnifications. For example, when using an objective with magnification 40x and $NA_{im} = 0.64$, the aperture can be adjusted so that an objective with magnification 20x is used with $NA_{im} = 0.32$, an objective with magnification 10x has $NA_{im} = 0.16$, and an objective with magnification 5x has $NA_{im} = 0.08$.

Preferably, the optical imaging system comprises an optical illumination device configured to illuminate the object, wherein a numerical aperture of the optical illumination device may be adapted to the numerical aperture of the objective such that a ratio of the numerical aperture of the optical illumination device to the numerical aperture of the objective equals a predetermined value. In case that the ratio $NA_{ill}/NA_{im}$ is constant ($NA_{ill}$ designating the numerical aperture of the optical illumination device, i.e. the illumination aperture), the contrast transfer function is identical for all objectives. Accordingly, the contrast transfer function has to be calculated and stored only once.

Preferably, the optical imaging system comprises a tube lens. In this case, the sensor module may comprise an optical adaption system configured to adapt a magnification of the tube lens to the at least two image sensors. By providing an optical adaption system, the optical sensor module may be integrated with the optical imaging system irrespective of the specific magnification of the tube lens.

The adjustable aperture element may be included in the optical adaption system. For example, the optical adaption system may comprise two optical systems provided on opposite sides with respect to a plane into which a pupil of the objective is imaged. In such a configuration, the aperture element may be located in or close to the afore mentioned plane.

Preferably, the optical imaging system is configured to provide a predetermined phase transfer function, and the processor is configured to process image information based on the predetermined phase transfer function for acquiring a phase distribution of the object.

In the first step of a possible process, the two images are normalized and subtracted from each other to give a difference image:

$$I_{dif}(x) = I_{+\Delta z}(x) - I_{-\Delta z}(x),$$

where $I_{+\Delta z}(x)$ and $I_{-\Delta z}(x)$ are normalized images with positive and negative defocus, respectively, and x indicates the spatial coordinates. The difference image for a given phase distribution of the object $\phi(x)$ and phase transfer function *PTF* can be written as

$$\mathcal{F}\{I_{dif}\} = PTF \cdot \mathcal{F}\{\phi\},$$

where $\mathcal{F}\{\cdot\}$ indicates a Fourier transform. The phase distribution can be calculated from a minimization problem:

$$\min\left\|\mathcal{F}\{I_{dif}\} - PTF \cdot \mathcal{F}\{\phi\}\right\|_2 + \alpha \cdot R(\phi),$$

where $R(\phi)$ is a renormalization term and $\alpha$ a renormalization parameter. In the particularly simple case of Tikhonov regularization, i.e.

$$R(\phi) = \|\mathcal{F}\{\phi\}\|_2,$$

the minimization can be done analytically, leading to

$$\mathcal{F}\{\phi\} = \frac{PTF^*}{|PTF|^2 + \alpha}\mathcal{F}\{I_{dif}\}.$$

Further, the processor may be configured to take into account a spherical aberration when processing image information based on the predetermined phase transfer function.

The reasoning, according to which the object side defocus and image side defocus are described equally (differing only by a factor $M^2$), applies only in paraxial approximation. Specifically, a residual wavefront error remains given by $\Delta z_1\sqrt{n_1^2 - NA^2\rho^2} - \Delta z_2\sqrt{n_2^2 - \frac{NA^2}{M^2}\rho^2},$ wherein $\Delta z_1$, $\Delta z_2$ designate the object-side defocus and the image-side defocus, respectively, $n_1$, $n_2$ designate the object-side refractive index and the image-side refractive index, respectively, and $\rho$ designates the normalized radius in the pupil. This residual wavefront error can be taken into account when recalculating the phase distribution. A method for recalculating the phase distribution is e.g described in the document JP 4917404 B2. In this document, however, only the paraxial approximation for the wavefront induced by defocus is applied (see equation (20) of the document). Therefore, the approach described herein is more precise. Thus, on the one hand, the present approach considers high aperture effects. On the other hand, the present approach additionally considers the spherical aberration due to the image-side defocusing as described above.

According to another aspect of the invention, a method for imaging an object using a microscope is provided, comprising the following steps: forming at least two optical images of the object in at least two different focusing states, and processing image information from the at least two optical images in order to obtain phase information, said phase information being characteristic of the object being imaged. The at least two optical images are simultaneously detected for generating the image information by means of an image sensor module having at least two image sensors associated with the at least two different focusing states, respectively.

Short Description of the Figures

Hereinafter, specific embodiments are described referring to the drawings, wherein:

Figure 1 is a schematic diagram illustrating a microscope according to an embodiment;

Figure 2 is a schematic diagram of an image sensor module included in the microscope shown in Figure 1;

Figure 3 is a schematic diagram of an image sensor module according to a modified embodiment;

Figure 4 is a schematic diagram of an image sensor module according to another modified embodiment;

Figure 5 is a schematic diagram illustrating a microscope according to a modified embodiment comprising a plurality of objectives; and

Figures 6A to 6C are diagrams illustrating phase transfer functions for an exemplary set of objectives having different magnifications.

Detailed description

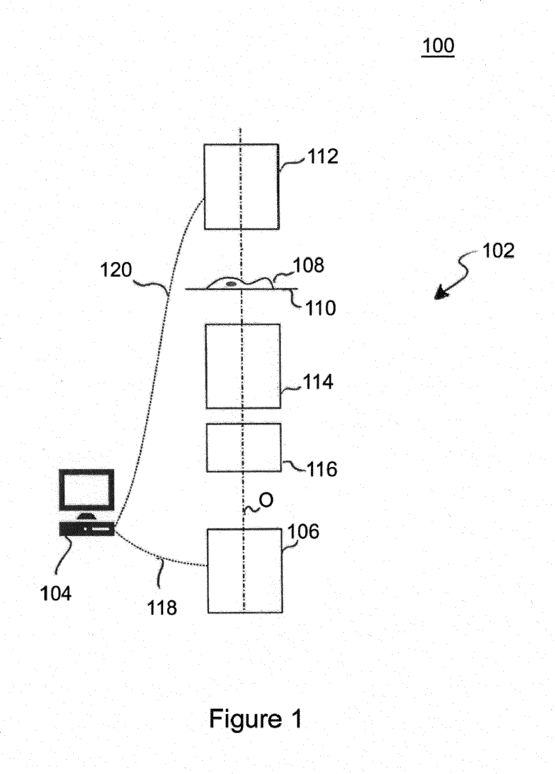

Figure 1 is a schematic diagram showing an imaging device 100 for a microscope. The imaging device 100 comprises an optical imaging system 102, a processor 104, and an image sensor module 106.

The optical imaging system 102 is configured to form an optical image of an object 108 being located on a stage 110. In addition to the image sensor module 106, the optical imaging system 102 may comprise an optical illumination device 112, at least one objective 114, and a tube lens 116. According to the specific embodiment shown in Figure 1, the microscope is configured as a transmitted-light microscope of inverted type. Accordingly, the optical illumination device 112 is located above the stage 110, wherein the objective 114 is arranged below the stage 110.

The processor 104 may be formed by an external computer configured to control overall operation of the imaging device 100. Specifically, the processor 104 controls an imaging operation performed by the image sensor module 106. Additionally, the processor 104 may control the optical illumination device 112, in particular a numerical aperture thereof as described below. Correspondingly, the processor 104 is connected to the image sensor module 106 and the optical illumination device 112 via control lines 118 and 120, respectively.

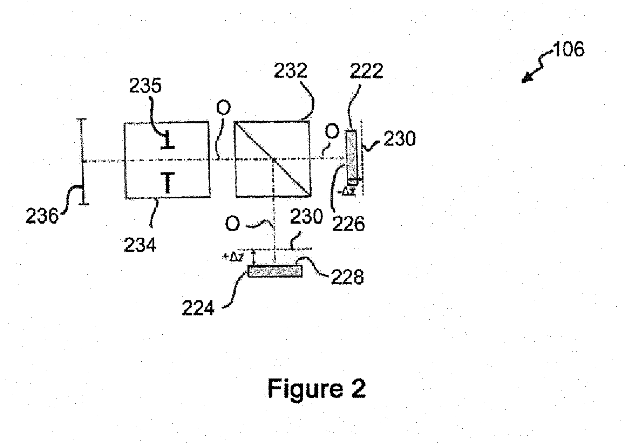

Figure 2 shows an exemplary configuration of the image sensor module 106. According to this configuration, the image sensor module 106 comprises a first image sensor 222 and a second image sensor 224. The image sensors 222, 224 are located offset to each other in direction of an optical axis O. Specifically, light receiving surfaces 226, 228 of the image sensor 222, 224, respectively, may be located on image planes which are offset relative to a nominal focus plane 230 in direction of the optical axis O. The nominal focus plane 230 defines an image plane on which an optimally focused image of the object would be formed by the optical system 102. In other words, the focus plane 230 defines a nominal optical path associated with an optimally focused image.

In the exemplary configuration of Figure 2, the light receiving surfaces 226, 228 of the image sensors 222, 224 are distant from the focus plane 230 by equal amounts $\pm\Delta z$, however located on opposite sides relative to the focus plane 230.

The image sensor module 106 may comprise a beam splitter 232 which splits light entering the image sensor module 106 into a first light beam propagating to the first image sensor 222 and a second light beam propagating to the second image sensor 224. Further, according to the embodiment shown in Figure 2, the image sensor module 106 comprises an optical adaption system 234 which serves to adapt a magnification of the tube lens 116 to the dimensions of the light receiving surfaces 226, 228 of the image sensors 222, 224.

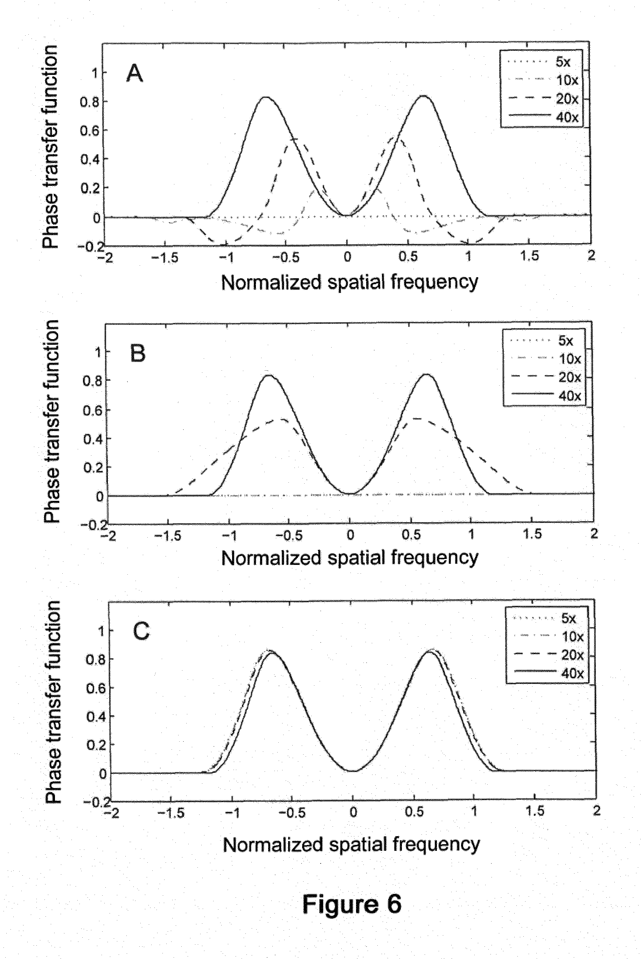

The image sensor module 106 includes an adjustable, preferably motorized aperture element 235 which is controlled by the processor 104 to vary an effective numerical aperture of the objective 114 as needed. Although not limited thereto, an advantageous effect of controlling the effective numerical aperture by means of the adjustable aperture element 235 will be illustrated below with reference to Figures 6A to 6C.

As shown in Figure 2, the imaging device comprises an interface device 236 wherein the image sensor module 106 can be coupled to the interface device 236 in order to integrate the image sensor module 106 into the optical imaging system 102. Thus, according to the embodiment shown in Figure 2, the image sensor module 106 is detachably provided within the optical imaging system 102. Alternatively, the image sensor module 106 may be permanently installed in the optical imaging system 102.

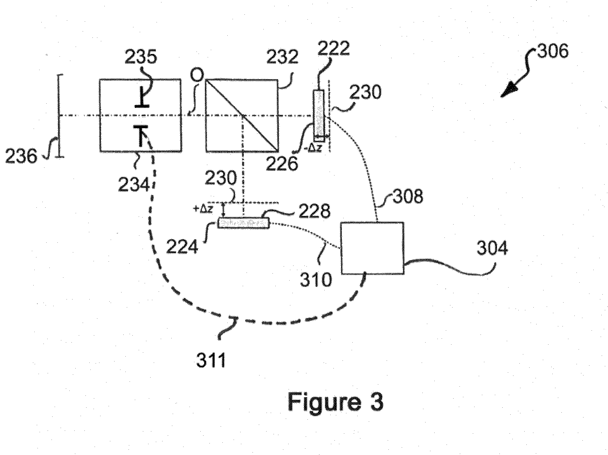

Figure 3 shows an image sensor module 306 according to a modified embodiment. The image sensor module 306 differs from the configuration shown in Figure 2 in that the image sensor module 306 includes an integrated processor 304 replacing the external processor 104. The integrated processor 304 is configured to control the image sensors 222, 224 and the aperture element 235 via control lines 308, 310, 311 respectively. By integrating the processor 304 with the image sensor module 306, calculations for obtaining the phase distribution of the object can be performed faster.

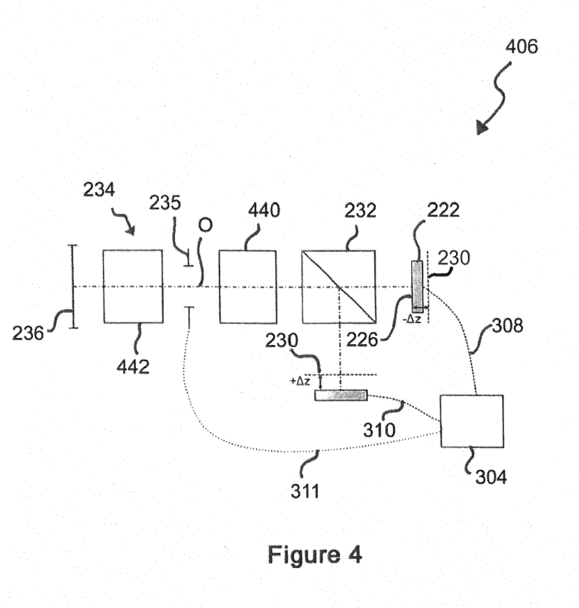

Figure 4 shows an image sensor module 406 according to a further embodiment which is based on the configurations shown in Figures 2 and 3. The image sensor module 406 comprises two optical systems 440, 442 forming the optical adaption system 234. The adjustable aperture element 235 is located between the optical systems 440, 442 in or near a plane into which a pupil of the objective 114 is imaged. The optical system 442 images the pupil of the objective 114 into or near the plane in which the aperture element 235 is located. In combination with the optical system 440, the object is imaged onto the focal plane 230 with a magnification that is adapted to the dimensions of the light receiving surfaces 226 and 228.

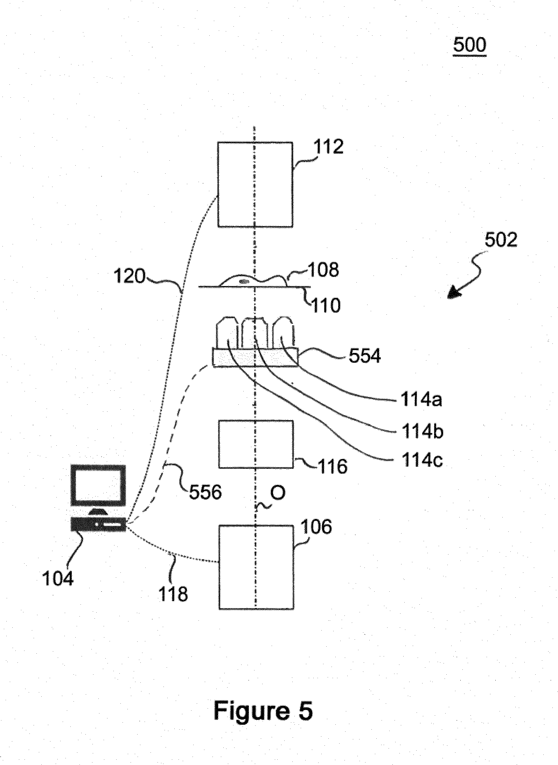

By providing the image sensor module 106 with the adjustable aperture element 235, the image sensor module 106 is particularly suitable to be used in combination with a configuration comprising a set of objectives for changing the total magnification of the microscope. Figure 5 shows a correspondingly modified imaging device 500. An optical imaging device 502 of the imaging device 500 differs from the embodiment shown in Figure 1 by an objective changer 554 carrying a plurality of objectives 114a, 114b, 114c having different magnifications. The objective changer 554 is controlled by the processor 104 via a control line 556 in order to selectively position one of the objectives 114a, 114b, 114c on the optical axis O of the optical imaging system 502. By doing so, the processor 104 changes the magnification as needed.

The adjustable aperture element 235 may be used to control the effective numerical aperture of the selected objective 114a, 114b, 114c dependent on the specific magnification thereof. The effect achieved by controlling the effective numerical aperture is illustrated in Figures 6A to 6C.

Figures 6A to 6C show exemplary phase transfer functions for a set of four objectives characterized by specific values for the ratio $M/NA_{im}$, namely 40x/0.64, 20x/0.45 10x/0.25, and 5x/0.15.

Figure 6A illustrates a case in which the numerical aperture $NA_{im}$ of the respective objective is not adapted; the illumination aperture (i.e. numerical aperture of the optical illumination device 112) $NA_{ill}$ is kept constant at 0.16; and the object-side defocus corresponds to the depth of field of the 40x objective. As can be seen from

Figure 6A, the phase transfer functions are very different. For the 20x and 10x objectives, the peak values of the transfer functions are lower than the peak values for the 40x objective. Further, the transfer functions for the 20x and 10x objectives have zero crossings. These zero crossings are disadvantageous as there is no sensitivity at spatial frequencies corresponding to zero crossings causing artifacts when recalculating the phase distribution. For the 5x objective, the transfer function is always zero since the illumination aperture $NA_{ill}$ is larger than the imaging aperture $NA_{im}$.

Figure 6B illustrates a case in which the imaging aperture $NA_{im}$ is adapted such that the object-side defocus corresponds to the depth of field of the objective used. Again, the illumination aperture $NA_{ill}$ is constant at 0.16. For the 20x objective, the zero has disappeared. However, for the 10x and 5x objectives the transfer function is always zero since the illumination aperture $NA_{ill}$ is larger than the imaging aperture $NA_{im}$.

Figure 6C illustrates a case in which the illumination aperture is also adjusted such that $NA_{ill} = 0.5\ NA_{im}$. Here, the phase transfer functions are almost identical.

Various modifications of the embodiments described above are possible. For example, according to the embodiments shown in Figures 2 to 4, the aperture element 235 is included in the optical adaption system 234. However, the aperture element 235 may also be located at another position inside the image sensor module 106, 306, 406.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

List of Reference Signs

| | |
|---|---|
| 100 | imaging device |
| 102 | optical imaging system |
| 104 | processor |
| 106 | image sensor module |
| 108 | object |
| 110 | stage |
| 112 | optical illumination device |
| 114, 114a, 114b, 114c | objective |
| 116 | tube lens |
| 118 | control line |
| 120 | control line |
| 222 | image sensor |
| 224 | image sensor |
| 226 | light receiving surface |
| 228 | light receiving surface |
| 230 | focus plane |
| 232 | beam splitter |
| 234 | optical adaption system |
| 235 | aperture element |
| 304 | a processor |
| 306 | image sensor module |
| 308 | control line |

| 310 | control line |
|-----|-------------|
| 311 | control line |
| 438 | control line |
| 440 | optical system |
| 442 | optical system |
| 500 | imaging device |
| 502 | optical imaging system |
| 554 | objective changer |
| 556 | control line |

**Claims**

1. An imaging device (100, 500) for a microscope, comprising:

   an optical imaging system (102, 502) configured to form at least two optical images of an object (108) in at least two different focusing states, and
   a processor (104, 304) configured to process image information from said at least two optical images in order to obtain phase information, said phase information being characteristic of said object (108) being imaged,
   wherein said optical imaging system (102, 502) comprises an image sensor module (106, 306, 406) having at least two image sensors (222, 224) associated with said at least two different focusing states, respectively, said at least two image sensors (222, 224) being configured to simultaneously detect said at least two optical images for generating said image information,
   wherein said image sensor module (106, 306, 406) comprises an adjustable aperture element (235) which is controllable by said processor (104, 304).

2. The imaging device (100, 500) according to claim 1, wherein said at least two image sensors (240, 250) are located offset to each other along an optical axis direction of said optical imaging system (102, 502) for providing two different optical path lengths associated with said at least to optical images, respectively.

3. The imaging device (100, 500) according to claim 2, wherein said at least two image sensors (240, 250) are arranged on different image planes along said optical axis direction, said image planes being located on opposite sides of a focus plane (230) of said optical imaging system (102, 502) in predetermined distances therefrom.

4. The imaging device (100, 500) according to claim 3, wherein said predetermined distances of the image planes from the focus plane (230) are chosen such that the object-side defocus is approximately equal to the depth of field of the optical imaging system (102, 502).

5. The optical imaging device (100, 500) according to any one of the preceding claims, wherein said image sensor module (106, 306, 406) comprises a beam splitter (232) configured to split light from said object (108) into at least two light beams associated with said at least two image sensors (222, 224), respectively.

6. The imaging device (100, 500) according to any one of the preceding claims, wherein said processor (104, 304) is included in said image sensor module (106, 306, 406).

7. The imaging device (100, 500) according to any one of the preceding claims, further comprising an interface device (236) configured to integrate said image sensor module (106, 306, 406) into said optical imaging system (102, 502) by coupling said image sensor module (106, 306, 406) to said interface device (236).

8. The imaging device (100, 500) according to any one the preceding claims, wherein said optical imaging system (102, 502) comprises at least one objective (114) configured to collect light from said object (108).

9. The imaging device (500) according to any one of the preceding claims, wherein said optical imaging system (502) comprises a plurality of objectives (114a, 114b, 114c) having different magnifications, each objective (114a, 114b, 114c) being selectively positionable on an optical axis (O) of said optical imaging system (502) to collect light from said object (108)

10. The imaging device (100) according to claim 8 or 9, wherein said processor (104, 304) is configured to control said adjustable aperture element (235) to adapt an effective numerical aperture of said light collecting objective (114) to a magnification of said optical imaging system (102, 502) such that a ratio of said effective numerical aperture to said magnification equals a predetermined value.

11. The imaging device (100, 500) according to one of the claims 8 to 10, wherein said optical imaging system (102) comprises an optical illumination device (112) configured to illuminate said object (108), and wherein a numerical aperture of said optical illumination device (112) is adaptable to said the effective numerical aperture of said the light controlling objective (114) such that a ratio of said effective numeral aperture of said optical illumination device to said numerical aperture of said objective equals a predetermined value.

12. The imaging device (100, 500) according to any of the preceding claims, wherein said optical imaging system (102, 502) comprises a tube lens (116), and wherein said image sensor module (106, 306, 406) comprises an optical adaption system (234) configured to adapt a magnification of said tube lens (140) to said at least two image sensors (240, 250).

13. The imaging device (100, 500) according to any one of the preceding claims, wherein said optical imaging system (102, 502) is configured to provide a predetermined phase transfer function, and wherein said processor (104, 304) is configured to process said image information based on said predetermined phase transfer function for acquiring a phase distribution of said object.

14. The imaging device (100, 500) according to claim 13, wherein said processor (104, 304) is configured to take into account spherical aberration when processing said image information based on said predetermined phase transfer function.

15. A method for imaging an object (108) using a microscope, comprising the following steps:

forming at least two optical images of said object (108) in at least two different focusing states, and
processing image information from said at least two optical images in order to obtain phase information, said phase information being characteristic of said object being imaging,
wherein said at least two optical images are simultaneously detected for generating said image information by means of an image sensor module (106, 306, 406) having at least two image sensors (222, 224) associated with said at least two different focusing states, respectively.

Figure 1

Figure 2

Figure 3

Figure 4

Figure 5

Figure 6

Europäisches
Patentamt

European
Patent Office

Office européen
des brevets

# EUROPEAN SEARCH REPORT

**Application Number**

EP 19 20 0116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/012525 A1 (IATIA IMAGING PTY LTD [AU]; PORTER COLIN [AU]) 13 February 2003 (2003-02-13) * abstract * * page 1, line 5 - page 5, line 31 * * page 7, line 30 - page 9, line 8; claims 1-17; figures 1-5 * | 1-3, 5-10,12, 13,15 | INV. G02B21/00 G02B27/10 |
| A | US 2013/155498 A1 (CHU FU-SHENG [TW] ET AL) 20 June 2013 (2013-06-20) * abstract * * page 1, right-hand column, paragraph 14 * * claims 1,9 * | 1,15 | |
| A | WO 02/31583 A1 (AMNIS CORP [US]; ORTYN WILLIAM E [US] ET AL.) 18 April 2002 (2002-04-18) * abstract * * page 1, line 5 - line 25 * * page 17, line 28 - page 18, line 18 * | 1 | |
| A | US 2012/044340 A1 (YAMAMOTO TAKASHI [JP]) 23 February 2012 (2012-02-23) * the whole document * | 1-15 | TECHNICAL FIELDS SEARCHED (IPC) G02B |

The present search report has been drawn up for all claims

| Place of search | Date of completion of the search | Examiner |
|---|---|---|
| Munich | 6 May 2020 | Jimenez Hernandez, P |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                     
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 20 0116

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2020

| Patent document cited in search report | | | Publication date | Patent family member(s) | | | Publication date |
|---|---|---|---|---|---|---|---|
| WO 03012525 | A1 | | 13-02-2003 | NONE | | | |
| US 2013155498 | A1 | | 20-06-2013 | US | 2013155498 | A1 | 20-06-2013 |
| | | | | US | 2015085356 | A1 | 26-03-2015 |
| | | | | US | 2019250393 | A1 | 15-08-2019 |
| WO 0231583 | A1 | | 18-04-2002 | AU | 1315702 | A | 22-04-2002 |
| | | | | AU | 2001297843 | A1 | 23-12-2002 |
| | | | | US | 2002051070 | A1 | 02-05-2002 |
| | | | | US | 2006119731 | A1 | 08-06-2006 |
| | | | | US | 2010188559 | A1 | 29-07-2010 |
| | | | | US | 2012013785 | A1 | 19-01-2012 |
| | | | | WO | 0231583 | A1 | 18-04-2002 |
| US 2012044340 | A1 | | 23-02-2012 | CN | 102375228 | A | 14-03-2012 |
| | | | | JP | 2012042669 | A | 01-03-2012 |
| | | | | US | 2012044340 | A1 | 23-02-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070182844 A1

- JP 4917404 B

**Non-patent literature cited in the description**

- **MIR et al.** Quantitative Phase Imaging. *Progress in Optics,* vol. 57 (133), 2012
- **TIAN ; WALLER.** Quantitative differential phase contrast imaging in an LED array microscope. *Optics Express,* 2015, vol. 23, 11394

- **KOU et al.** Quantitative phase restoration by direct inversion using the optical transfer function. *Optics Letters,* 2011, vol. 36, 2671